(19) Europäisches Patentamt
European Patent Office
Office européen des brevets

(11) EP 2 115 015 B1

(12) **EUROPÄISCHE PATENTSCHRIFT**

(45) Veröffentlichungstag und Bekanntmachung des Hinweises auf die Patenterteilung:
**23.04.2014 Patentblatt 2014/17**

(21) Anmeldenummer: **08708655.9**

(22) Anmeldetag: **04.02.2008**

(51) Int Cl.:
***C08F 2/22*** *(2006.01)* ***C08F 2/38*** *(2006.01)*
***C08F 265/00*** *(2006.01)* ***C08F 265/04*** *(2006.01)*
***C08F 265/06*** *(2006.01)* ***C08F 267/00*** *(2006.01)*
***C09D 151/00*** *(2006.01)* ***C09J 151/00*** *(2006.01)*
***C08L 51/00*** *(2006.01)* ***C08F 291/00*** *(2006.01)*

(86) Internationale Anmeldenummer:
**PCT/EP2008/051352**

(87) Internationale Veröffentlichungsnummer:
**WO 2008/095900 (14.08.2008 Gazette 2008/33)**

(54) **VERFAHREN ZUR HERSTELLUNG EINER WÄSSRIGEN POLYMERZUSAMMENSETZUNG UNTER VERWENDUNG WASSERLÖSLICHER RADIKALKETTENREGLER**

METHOD FOR PRODUCING AN AQUEOUS POLYER COMPOSITION USING WATER-SOLUBLE RADCIAL CHAIN REGULATOR

PROCÉDÉ DE FABRICATION D'UNE COMPOSITION POLYMÈRE AQUEUSE AU MOYEN DE RÉGULATEURS DE CHAÎNES RADICALAIRES SOLUBLES DANS L'EAU

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **07.02.2007 EP 07101884**

(43) Veröffentlichungstag der Anmeldung:
**11.11.2009 Patentblatt 2009/46**

(73) Patentinhaber: **BASF SE**
**67056 Ludwigshafen (DE)**

(72) Erfinder:
- **ELIZALDE, Oihana**
  **68159 Mannheim (DE)**
- **GERST, Matthias**
  **67435 Neustadt (DE)**

(56) Entgegenhaltungen:
**WO-A-03/035778** **WO-A-2006/082223**
**WO-A-2007/082819** **WO-A-2007/122089**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Gegenstand der vorliegenden Erfindung ist ein Verfahren zur Herstellung einer wässrigen Polymerzusammensetzung zur Verwendung gemäß Anspruch 1 durch radikalische initiierte Emulsionspolymerisation eines Monomerengemisches M, welches zusammengesetzt ist aus

i) 0,01 bis 10 Gew.-% wenigstens eines ethylenisch ungesättigten Monomeren M1, welches wenigstens eine Epoxid- und/oder wenigstens eine Hydroxyalkylgruppe enthält, und
ii) 90 bis 99,99 Gew.-% wengistens eines weiteren ethylenisch ungesättigten Monomeren M2, welches sich von den Monomeren M1 unterscheidet,

in einem wässrigen Medium in Gegenwart eines Polymers A, wobei das Polymer A aus

a) 80 bis 100 Gew.-% wenigstens einer ethylenisch ungesättigten Mono- und/oder Dicarbonsäure [Monomere A1] und
b) 0 bis 20 Gew.-% wenigstens eines weiteren ethylenisch ungesättigten Monomeren, welches sich von den Monomeren A1 unterscheidet [Monomere A2], in einpolymerisierter Form aufgebaut ist, und wobei
das Verhältnis der Gesamtmenge des Monomerengemisches M (Gesamtmonomerenmenge M) zur Gesamtmenge des Polymers A 1:99 bis 99:1 beträgt, welches dadurch gekennzeichnet ist, dass das Polymer A in einem wässrigen Medium durch radikalisch initiierte Polymerisation der Monomeren A1 und A2 in Anwesenheit eines schwefel-, stickstoff-, und/oder phosphorhaltigen Radikalkettenreglers, welcher bei 20 °C und 1 atm (= 1,013 bar absolut) in entionisiertem Wasser eine Löslichkeit ≥ 5 g/100 g Wasser aufweist, hergestellt wurde.

Gegenstand der vorliegenden Erfindung ist ebenfalls die Verwendung dieser wässrigen Polymerzusammensetzung als Bindemittel bei der Herstellung von Klebstoffen, Dichtmassen, Formkörpern aus fasrigen oder körnigen Substraten, Kunststoffputzen, Papierstreichmassen, Anstrichmitteln und zur Imprägnierung von Rohpapieren sowie zur Modifizierung von mineralischen Bindemitteln oder Kunststoffen.
In der unveröffentlichten deutschen Patentanmeldung mit dem Aktenzeichen DE 102006001979.2 wird die Verwendung einer wässrigen Polymerzusammensetzung, enthaltend eine Polysäure und ein Epoxy- oder Hydroxyalkylgruppen funktionalisiertes Polymerisat, zur Imprägnierung von Rohpapier offenbart. In der ebenfalls unveröffentlichten deutschen Patentanmeldung mit dem Aktenzeichen DE 102006019184.6 wird die Verwendung einer wässrigen Polymerzusammensetzung, enthaltend eine Polysäure und ein Epoxy- oder Hydroxyalkylgruppen funktionalisiertes Polymerisat, als Bindemittel für faserförmige oder körnige Substrate offenbart.
Aufgabe der vorliegenden Erfindung war es, ein verbessertes Verfahren zur Herstellung einer wässrigen Polymerzusammensetzung, enthaltend eine Polysäure und ein Epoxy- oder Hydroxyalkylgruppen funktionalisiertes Polymerisat, zur Verfügung zu stellen.
Demgemäß wurde das eingangs definierte Verfahren gefunden.
Die Durchführung von radikalisch initiierten Emulsionspolymerisationen von ethylenisch ungesättigten Monomeren in einem wässrigen Medium ist vielfach vorbeschrieben und dem Fachmann daher hinreichend bekannt [vgl. hierzu Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969)]. Die radikalisch initiierte wässrige Emulsionspolymerisationsreaktionen erfolgen üblicherweise dergestalt, dass man die ethylenisch ungesättigten Monomere unter Mitverwendung von Dispergierhilfsmitteln, im wässrigen Medium in Form von Monomerentröpfchen dispers verteilt und mittels eines radikalischen Polymerisationsinitiators polymerisiert. Das vorliegende erfindungsgemäße Verfahren zur Herstellung einer wässrigen Polymerzusammensetzung unterscheidet sich vom bekannten Stand der Technik dadurch, dass die Monomerenmischung M in Anwesenheit eines Polymers A, welches unter Verwendung eines spezifischen Radikalkettenreglers hergestellt wurde, radikalisch polymerisiert wird.
Zur Herstellung der wässrigen Polymerzusammensetzung wird klares Wasser, bevorzugt Trinkwasser und insbesondere bevorzugt entionisiertes Wasser verwendet, dessen Gesamtmenge so bemessen wird, dass sie 30 bis 90 Gew.-% und vorteilhaft 40 bis 60 Gew.-%, jeweils bezogen auf die wässrige Polymerzusammensetzung, beträgt.
Erfindungsgemäß wird ein Polymer A eingesetzt, welches aus

a) 80 bis 100 Gew.-% wenigstens eines Monomeren A1 und
b) 0 bis 20 Gew.-% wenigstens eines Monomeren A2, in einpolymerisierter Form aufgebaut ist,
und welches in einem wässrigen Medium durch radikalisch initiierte Polymerisation der Monomeren A1 und A2 in

Anwesenheit eines schwefel-, stickstoff-, und/oder phosphorhaltigen Radikalkettenreglers, welcher bei 20 °C und 1 atm in entionisiertem Wasser eine Löslichkeit ≥ 5 g/100 g Wasser aufweist, hergestellt wurde.

Als Monomere A1 kommen insbesondere 3 bis 6 C-Atome aufweisende $\alpha,\beta$-monoethylenisch ungesättigte Mono- und Dicarbonsäuren, deren mögliche Anhydride sowie deren wasserlöslichen Salze, insbesondere deren Alkalimetallsalze, wie beispielsweise Acrylsäure, Methacrylsäure, Maleinsäure, Fumarsäure, Itaconsäure, Citraconsäure, Tetrahydrophthalsäure, bzw. deren Anhydride, wie beispielsweise Maleinsäureanhydrid, sowie die Natrium- oder Kaliumsalze der vorgenannten Säuren in Betracht. Besonders bevorzugt sind Acrylsäure, Methacrylsäure und/oder Maleinsäureanhydrid, wobei Acrylsäure insbesondere bevorzugt ist.

Zur Herstellung des erfindungsgemäß eingesetzten Polymers A kommt als wenigstens ein Monomer A2 insbesondere in einfacher Weise mit Monomer A1 radikalisch copolymerisierbare ethylenisch ungesättigte Verbindungen in Betracht, wie beispielsweise Ethylen, vinylaromatische Monomere, wie Styrol, $\alpha$-Methylstyrol, o-Chlorstyrol oder Vinyltoluole, Vinylhalogenide, wie Vinylchlorid oder Vinylidenchlorid, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden $\alpha,\beta$-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl-, pentyl-, -hexyl-, -heptyl-, -octyl-, -nonyl-, -decyl- und -2-ethylhexylester, Fumar- und Maleinsäuredimethylester oder -di-n-butylester, Nitrile $\alpha,\beta$-monoethylenisch ungesättigter Carbonsäuren, wie Acrylnitril, Methacrylnitril, Fumarsäuredinitril, Maleinsäuredinitril sowie $C_{4-8}$-konjugierte Diene, wie 1,3-Butadien (Butadien) und Isopren. Die genannten Monomere bilden in der Regel die Hauptmonomeren, die, bezogen auf die Gesamtmenge an Monomeren A2, einen Anteil von ≥ 50 Gew.-%, bevorzugt ≥ 80 Gew.-% und insbesondere bevorzugt ≥ 90 Gew.-% auf sich vereinen oder sogar die Gesamtmenge der Monomeren A2 bilden. In aller Regel weisen diese Monomeren in Wasser bei Normalbedingungen [20 °C, 1 atm (absolut)] lediglich eine mäßige bis geringe Löslichkeit auf.

Monomere A2, die unter den vorgenannten Bedingungen eine erhöhte Wasserlöslichkeit aufweisen, sind solche, die entweder wenigstens eine Sulfonsäuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien Acrylamid und Methacrylamid, ferner Vinylsulfonsäure, 2-Acrylamido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat. Im Normalfall sind die vorgenannten wasserlöslichen Monomeren A2 lediglich als modifizierende Monomere in Mengen von ≤ 10 Gew.-%, bevorzugt ≤ 5 Gew.-% und insbesondere bevorzugt ≤ 3 Gew.-%, bezogen auf die Gesamtmenge an Monomeren A2, enthalten.

Monomere A2, die üblicherweise die innere Festigkeit der Verfilmungen einer Polymermatrix erhöhen, weisen normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit $\alpha,\beta$-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-$C_1$-$C_8$-Hydroxyalkylester wie n-Hydroxyethyl-, n-Hydroxypropyl- oder n-Hydroxybutylacrylat und -methacrylat sowie Verbindungen, wie Diacetonacrylamid und Acetylacetoxyethylacrylat bzw. -methacrylat. Häufig werden die vorgenannten vernetzenden Monomeren A2 in Mengen von ≤ 10 zu Gew.-%, bevorzugt jedoch in Mengen von ≤ 5 Gew.%, jeweils bezogen auf die Gesamtmenge an Monomeren A2, eingesetzt. Insbesondere bevorzugt werden jedoch keinerlei derartige vernetzende Monomeren A2 zu Herstellung des Polymers A eingesetzt.

Vorteilhaft werden zur Herstellung des Polymers A als Monomere A2 solche Monomerenmischungen eingesetzt, welche zu

- 50 bis 100 Gew.-% Ester der Acryl- und/oder Methacrylsäure mit 1 bis 12 C-Atome aufweisenden Alkanolen, oder

- 50 bis 100 Gew.-% Styrol und/oder Butadien, oder

- 50 bis 100 Gew.-% Vinylchlorid und/oder Vinylidenchlorid, oder
- 40 bis 100 Gew.-% Vinylacetat, Vinylpropionat und/oder Ethylen
  enthalten.

Erfindungsgemäß vorteilhaft beträgt der einpolymerisierte Anteil an Monomeren A2 im Polymer A ≤ 10 Gew.-% oder ≤ 5 Gew.-%. Insbesondere vorteilhaft enthält das Polymer A keinerlei Monomeren A2 einpolymerisiert.

Die eingesetzten Polymere A werden erfindungsgemäß durch radikalisch initiierte Polymerisation der Monomeren A in einem wässrigen Medium in Anwesenheit eines schwefel-, stickstoff-, und/oder phosphorhaltigen Radikalkettenreglers, welcher bei 20 °C und 1 atm in entionisiertem Wasser eine Löslichkeit ≥ 5 g/100 g Wasser aufweist, hergestellt.

Die prinzipielle Herstellung von Polymeren A ist dem Fachmann geläufig (siehe beispielsweise A. Echte, Handbuch der Technischen Polymerchemie, Kapitel 6, VCH, Weinheim, 1993 oder B. Vollmert, Grundriss der Makromolekularen Chemie, Band 1, E. Vollmert Verlag, Karlsruhe, 1988).

Als schwefelhaltige Radikalkettenregler werden beispielsweise Mercaptoalkanole, wie 2-Mercaptoethanol, 2-Mercaptopropanol oder 3-Mercaptopropanol, Alkalimetallhydrogensulfite, wie Natriumhydrogensulfit oder Kaliumhydrogensulfit, sowie Thioschwefelsäure und deren Alkalimetallsalze oder 3-Mercapto-2-aminopropansäure (Cystein), als stickstoffhaltige Radikalkettenregler beispielsweise Hydroxylamin(ammonium)-Verbindungen, wie Hydroxylammoniumsulfat und als phosphorhaltige Radikalkettenregler beispielsweise phosphorige Säure, hypophosphorige Säure, metaphosphorige Säure, Orthophosphorsäure, Phyrophosphorsäure oder Polyphosphorsäure und deren Alkalimetallsalze, insbesondere deren Natrium- oder Kaliumsalze, vorteilhaft Natriumhypophosphit oder Natriumdihydrogenphosphat eingesetzt.

Erfindungswesentlich ist, dass die schwefel-, Stickstoff-, und/oder phosphorhaltigen Radikalkettenregler, bei 20 °C und 1 atm in entionisiertem Wasser eine Löslichkeit ≥ 5 g, vorteilhaft ≥ 10 g und insbesondere vorteilhaft ≥ 20 g pro 100 g Wasser aufweisen.

Insbesondere vorteilhaft ist der Radikalkettenregler ausgewählt ist unter hypophosphoriger Säure und deren Alkalimetallsalze, insbesondere Natriumhypophosphit, Alkalimetallhydrogensulfite, insbesondere Natriumhydrogensulfit, Hydroxylamoniumsulfat und/oder 2-Mercaptoethanol.

Bei der Herstellung des Polymeren A ist es vorteilhaft, wenn die Menge des schwefel-, stickstoff-, und/oder phosphorhaltigen Radikalkettenreglers so gewählt wird, dass das gewichtsmittlere Molekulargewicht des Polymeren A ≥ 1000 g/mol und ≤ 20000 g/mol und insbesondere ≥ 2000 g/mol und ≤ 15000 g/mol beträgt. Die erforderliche Menge des Radikalkettenreglers und die entsprechenden Polymerisationsbedingungen kennt der Fachmann oder kann von diesem in einfachen Routineversuchen ermittelt werden. Erfindungsgemäß kann das Polymere A in Form seiner wässrigen Lösung oder in Form seines durch Trocknung (beispielsweise Gefrier- oder Sprühtrocknung) erhaltenen Feststoffes eingesetzt werden. Insbesondere vorteilhaft wird das Polymere A in Form seiner bei der Herstellung erhaltenen wässrigen Lösung eingesetzt.

Die gewichtsmittleren Molekulargewichte der Polymerisate A werden in einer dem Fachmann geläufigen Art und Weise nach DIN 55672-1 gelpermeationschromatographisch (beispielsweise Linearsäule: Supremea M der Firma. PSS, Eluens: 0,08 mol/l TRIS-Puffer pH 7,0, entionisiertes Wasser, Flüssigkeitsstrom: 0,8 ml/min, Detektor: Differentialrefraktometer ERC 7510 der Firma ERC, innerer Standard/Eichsubstanz: Polyacrylsäure-Natriumsalz) bestimmt.

Bei der Herstellung der wässrigen Polymerzusammensetzung ist es erfindungsgemäß möglich, gegebenenfalls eine Teil- oder die Gesamtmenge an Polymer A im Polymerisationsgefäß vorzulegen. Es ist aber auch möglich, die Gesamtmenge oder die gegebenenfalls verbliebene Restmenge an Polymer A während der Polymerisationsreaktion des Monomerengemisches M zuzudosieren. Die Gesamtmenge oder die gegebenenfalls verbliebene Restmenge an Polymer A kann dem Polymerisationsgefäß dabei diskontinuierlich in einer oder mehreren Portionen oder kontinuierlich mit gleichbleibenden oder sich verändernden Mengenströmen zudosiert werden. Vorteilhaft wird die Gesamtmenge an Polymer A vor Auslösung der Polymerisationsreaktion des Monomerengemisches M im Polymerisationsgefäß vorgelegt. Insbesondere vorteilhaft wird das Polymer A "in-situ" im Polymerisationsgefäß für die Polymerisation des Monomerengemisches M hergestellt.

Im Rahmen des erfindungsgemäßen Verfahrens zur Herstellung der wässrigen Polymerzusammensetzung werden häufig Dispergierhilfsmittel mitverwendet, die sowohl die Monomerentröpfchen als auch die durch die radikalisch initiierte Polymerisation des Monomerengemisches M erhaltenen Polymerteilchen in der wässrigen Phase dispers verteilt halten und so die Stabilität der erzeugten wässrigen Polymerzusammensetzung gewährleisten. Als solche kommen sowohl die zur Durchführung von radikalischen wässrigen Emulsionspolymerisationen üblicherweise eingesetzten Schutzkolloide als auch Emulgatoren in Betracht.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Seiten 411 bis 420, Georg-Thieme-Verlag, Stuttgart, 1961. Da das erfindungsgemäß eingesetzte Polymer A auch als Schutzkolloid wirken kann, werden erfindungsgemäß vorteilhaft keine zusätzlichen Schutzkolloide eingesetzt.

Selbstverständlich können auch Gemische aus Emulgatoren und/oder Schutzkolloiden verwendet werden. Häufig werden als Dispergierhilfsmittel ausschließlich Emulgatoren eingesetzt, deren relative Molekulargewichte im Unterschied zu den Schutzkolloiden üblicherweise unter 1000 g/mol liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind.

Gebräuchliche Emulgatoren sind z.B. ethoxilierte Mono-, Di- und Tri-Alkylphenole (EO-Grad: 3 bis 50, Alkylrest: $C_4$ bis $C_{12}$), ethoxilierte Fettalkohole (EO-Grad: 3 bis 50; Alkylrest: $C_8$ bis $C_{36}$) sowie Alkalimetall- und Ammoniumsalze von Alkylsulfaten (Alkylrest: $C_8$ bis $C_{12}$), von Schwefelsäurehalbestern ethoxylierter Alkanole (EO-Grad: 3 bis 30, Alkylrest: $C_{12}$ bis $C_{18}$) und ethoxilierter Alkylphenole (EO-Grad: 3 bis 50, Alkylrest: $C_4$ bis $C_{12}$), von Alkylsulfonsäuren (Alkylrest: $C_{12}$ bis $C_{18}$) und von Alkylarylsulfonsäuren (Alkylrest: $C_9$ bis $C_{18}$). Weitere geeignete Emulgatoren finden sich in Houben-Weyl, Methoden der organischen Chemie, Band XIV/1, Makromolekulare Stoffe, Seiten 192 bis 208, Georg-Thieme-Verlag, Stuttgart, 1961.

Als grenzflächenaktive Substanzen haben sich ferner Verbindungen der allgemeinen Formel I

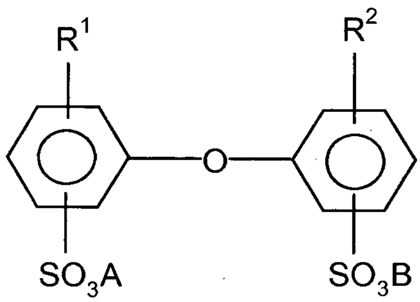

(I)

worin $R^1$ und $R^2$ $C_4$- bis $C_{24}$-Alkyl bedeuten und einer der Reste $R^1$ oder $R^2$ auch für Wasserstoff stehen kann, und A und B Alkalimetallionen und/oder Ammoniumionen sein können, erwiesen. In der allgemeinen Formel I bedeuten $R^1$ und $R^2$ bevorzugt lineare oder verzweigte Alkylreste mit 6 bis 18 C-Atomen, insbesondere mit 6, 12 und 16 C-Atomen oder H-Atome, wobei $R^1$ und $R^2$ nicht beide gleichzeitig H-Atome sind. A und B sind bevorzugt Natrium-, Kalium -oder Ammoniumionen, wobei Natriumionen besonders bevorzugt sind. Besonders vorteilhaft sind Verbindungen I, in denen A und B Natriumionen, $R^1$ ein verzweigter Alkylrest mit 12 C-Atomen und $R^2$ ein H-Atom oder $R^1$ sind. Häufig werden technische Gemische verwendet, die einen Anteil von 50 bis 90 Gew.-% des monoalkylierten Produktes aufweisen, beispielsweise Dowfax® 2A1 (Marke der Dow Chemical Company). Die Verbindungen I sind allgemein bekannt, z.B. aus US-A 4 269 749, und im Handel erhältlich.

Bevorzugt werden für das erfindungsgemäße Verfahren nichtionische und/oder anionische Emulgatoren verwendet.

In der Regel beträgt die Menge an zusätzlich eingesetztem Dispergierhilfsmittel, insbesondere Emulgatoren, 0,1 bis 5 Gew.-%, bevorzugt 1 bis 3 Gew.-%, jeweils bezogen auf die Gesamtmenge des Monomerengemisches M.

Erfindungsgemäß ist es möglich, gegebenenfalls eine Teil- oder die Gesamtmenge an Dispergierhilfsmittel im Polymerisationsgefäß als Bestandteil des das Polymere A enthaltenden wässrigen Mediums vorzulegen. Es ist aber auch möglich, die Gesamtmenge oder die gegebenenfalls verbliebene Restmenge an Dispergierhilfsmittel während der Polymerisationsreaktion des Monomerengemisches M zuzudosieren. Die Gesamtmenge oder die gegebenenfalls verbliebene Restmenge an Dispergierhilfsmittel kann dem Polymerisationsgefäß dabei diskontinuierlich in einer oder mehreren Portionen oder kontinuierlich mit gleichbleibenden oder sich verändernden Mengenströmen zudosiert werden. Insbesondere vorteilhaft erfolgt die Dosierung der Dispergierhilfsmittel während der Polymerisationsreaktion kontinuierlich mit gleichbleibenden Mengenströmen, insbesondere als Bestandteil einer wässrigen Monomerenemulsion.

Das erfindungsgemäß eingesetzte Monomerengemisch M setzt sich zusammen aus

i) 0,01 bis 10 Gew.-% wenigstens eines ethylenisch ungesättigten Monomeren M1, welches wenigstens eine Epoxid- und/oder wenigstens eine Hydroxyalkylgruppe enthält, und

ii) 90 bis 99,99 Gew.-% wengistens eines weiteren ethylenisch ungesättigten Monomeren M2, welches sich von den Monomeren M1 unterscheidet.

Dabei kann das Monomerengemisch M erfindungsgemäß in Form seiner separaten Einzelkomponenten Monomere M1 und Monomere M2, beispielsweise in Form von separaten Einzelströmen, wie auch in Form eines homogenen Gemisches der Monomeren M1 und M2, beispielsweise in Form einer homogenen Monomerenemulsion eingesetzt werden.

Als Monomere M1 kommen insbesondere Glycidylacrylat und/oder Glycidylmethacrylat sowie Hydroxyalkylacrylate und -methacrylate mit C2- bis C10-Hydroxyalkylgruppen, insbesondere C2- bis C4-Hydroxyalkylgruppen und bevorzugt C2- und C3-Hydroxyalkylgruppen. Beispielhaft genannt seien 2-Hydroxyethylacrylat, 2-Hydroxyethylmethacrylat, 3-Hydroxyproplylacrylat, 3-Hydroxypropylmethacrylat, 4-Hydroxybutylacrylat und/oder 4-Hydroxybutylmethacrylat. Mit besonderem Vorteil wird jedoch Glycidylacrylat und/oder Glycidylmethacrylat als Monomer M1 eingesetzt, wobei Glycidylmethacrylat insbesondere bevorzugt ist.

Erfindungsgemäß ist es möglich, gegebenenfalls eine Teil- oder die Gesamtmenge an Monomeren M1 im Polymerisationsgefäß vorzulegen. Es ist aber auch möglich, die Gesamtmenge oder die gegebenenfalls verbliebene Restmenge an Monomeren M1 während der Polymerisationsreaktion zuzudosieren. Die Gesamtmenge oder die gegebenenfalls verbliebene Restmenge an Monomeren M1 kann dem Polymerisationsgefäß dabei diskontinuierlich in einer oder mehreren Portionen oder kontinuierlich mit gleichbleibenden oder sich verändernden Mengenströmen zudosiert werden. Insbesondere vorteilhaft erfolgt die Dosierung der Monomeren M1 während der Polymerisationsreaktion kontinuierlich mit gleichbleibenden Mengenströmen, insbesondere als Bestandteil einer wässrigen Monomerenemulsion.

Zur Herstellung der erfindungsgemäßen wässrigen Polymerzusammensetzungen kommt als wenigstens ein Monomer M2 insbesondere in einfacher Weise mit Monomer M1 radikalisch copolymerisierbare ethylenisch ungesättigte Verbindungen in Betracht, wie beispielsweise Ethylen, vinylaromatische Monomere, wie Styrol, α-Methylstyrol, o-Chlorstyrol oder Vinyltoluole, Vinylhalogenide, wie Vinylchlorid oder Vinylidenchlorid, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl-, pentyl-, -hexyl-, -heptyl-, -octyl-, - nonyl-, -decyl- und -2-ethylhexylester, Fumar- und Maleinsäuredimethylester oder -di-n-butylester, Nitrile α,β-mönoethylenisch ungesättigter Carbonsäuren, wie Acrylnitril, Methacrylnitril, Fumarsäuredinitril, Maleinsäuredinitril sowie $C_{4-8}$-konjugierte Diene, wie 1,3-Butadien (Butadien) und Isopren. Die genannten Monomere bilden in der Regel die Hauptmonomeren, die, bezogen auf die Gesamtmenge an Monomeren M2, einen Anteil von ≥ 50 Gew.-%, bevorzugt ≥ 80 Gew.-% und insbesondere ≥ 90 Gew.-% auf sich vereinen. In aller Regel weisen diese Monomeren in Wasser bei Normalbedingungen [20 °C, 1 atm (absolut)] lediglich eine mäßige bis geringe Löslichkeit auf.

Monomere M2, die unter den vorgenannten Bedingungen eine erhöhte Wasserlöslichkeit aufweisen, sind solche, die entweder wenigstens eine Säuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien 3 bis 6 C-Atome aufweisende α,β-monoethylenisch ungesättigte Mono- und Dicarbonsäuren und deren Amide, wie z.B. Acrylsäure, Methacrylsäure, Maleinsäure, Fumarsäure, Itaconsäure, Acrylamid und Methacrylamid, ferner Vinylsulfonsäure, 2-Acrylamido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat. Im Normalfall sind die vorgenannten wasserlöslichen Monomeren M2 lediglich als modifizierende Monomere in Mengen von ≤ 10 Gew.-%, bevorzugt ≤ 5 Gew.-% und insbesondere bevorzugt ≤ 3 Gew.-%, bezogen auf die Gesamtmenge an Monomeren M2, enthalten.

Monomere M2, die üblicherweise die innere Festigkeit der Verfilmungen einer Polymermatrix erhöhen, weisen normalerweise wenigstens eine N-Methylol- oder Carbonylgruppe oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und-dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopen-tadienylacrylat, Triallylcyanurat oder Triallylisocyanurat. In diesem Zusammenhang auch von Bedeutung sind Verbindungen, wie Diacetonacrylamid und Acetylacetoxyethylacrylat bzw. -methacrylat. Häufig werden die vorgenannten vernetzenden Monomeren M2 in Mengen von ≤ 10 zu Gew.-%, bevorzugt in Mengen von ≤ 5 Gew.-% und insbesondere bevorzugt in Mengen von ≤ 3 Gew.-%, jeweils bezogen auf die Gesamtmenge an Monomeren M2, eingesetzt. Häufig werden jedoch keinerlei derartige vernetzende Monomeren M2 verwendet.

Vorteilhaft werden erfindungsgemäß als Monomere M2 solche Monomerenmischungen eingesetzt, welche zu

- 50 bis 99,9 Gew.-% Ester der Acryl- und/oder Methacrylsäure mit 1 bis 12 C-Atome aufweisenden Alkanolen, oder
- 50 bis 99,9 Gew.-% Styrol und/oder Butadien, oder
- 50 bis 99,9 Gew.-% Vinylchlorid und/oder Vinylidenchlorid, oder
- 40 bis 99,9 Gew.-% Vinylacetat, Vinylpropionat und/oder Ethylen

enthalten.

Insbesondere vorteilhaft werden erfindungsgemäß als Monomere M2 solche Monomerenmischungen eingesetzt, welche zu

- 0,1 bis 5 Gew.-% wenigstens eine 3 bis 6 C-Atome aufweisende $\alpha,\beta$-monoethylenisch ungesättigte Mono- und/oder Dicarbonsäure und/oder deren Amid und
  50 bis 99,9 Gew.-% wenigstens ein Ester der Acryl- und/oder Methacrylsäure mit 1 bis 12 C-Atome aufweisenden Alkanolen, oder
- 0,1 bis 5 Gew.-% wenigstens eine 3 bis 6 C-Atome aufweisende $\alpha,\beta$-monoethylenisch ungesättigte Mono- und/oder Dicarbonsäure und/oder deren Amid und
  50 bis 99,9 Gew.-% Styrol und/oder Butadien, oder
- 0,1 bis 5 Gew.-% wenigstens eine 3 bis 6 C-Atome aufweisende $\alpha,\beta$-monoethylenisch ungesättigte Mono- und/oder Dicarbonsäure und/oder deren Amid und
  50 bis 99,9 Gew.-% Vinylchlorid und/oder Vinylidenchlorid, oder
- 0,1 bis 5 Gew.-% wenigstens eine 3 bis 6 C-Atome aufweisende $\alpha,\beta$-monoethylenisch ungesättigte Mono- und/oder Dicarbonsäure und/oder deren Amid und
  40 bis 99,9 Gew.-% Vinylacetat, Vinylpropionat und/oder Ethylen

enthalten.

Erfindungsgemäß ist es möglich, gegebenenfalls eine Teil- oder die Gesamtmenge an Monomeren M2 im Polymerisationsgefäß vorzulegen. Es ist aber auch möglich, die Gesamtmenge oder die gegebenenfalls verbliebene Restmenge an Monomeren M2 während der Polymerisationsreaktion zuzudosieren. Die Gesamtmenge oder die gegebenenfalls verbliebene Restmenge an Monomeren M2 kann dem Polymerisationsgefäß dabei diskontinuierlich in einer oder mehreren Portionen oder kontinuierlich mit gleichbleibenden oder sich verändernden Mengenströmen zudosiert werden. Insbesondere vorteilhaft erfolgt die Dosierung der Monomeren M2 während der Polymerisationsreaktion kontinuierlich mit gleichbleibenden Mengenströmen, insbesondere als Bestandteil einer wässrigen Monomerenemulsion.

Mit Vorteil werden die Monomeren M1 und M2 gemeinsam als Monomerengemisch M, insbesondere in Form einer wässrigen Monomerenemulsion eingesetzt.

Erfindungsgemäß vorteilhaft werden Monomerengemische M eingesetzt, deren Gesamtmenge an Monomeren M1 0,1 Gew.-% bis 5 Gew.-% und insbesondere 0,5 Gew.- % bis 3 Gew.-% und dementsprechend die Gesamtmenge an Monomeren M2 95 Gew.-% bis 99,9 Gew.-% und insbesondere 97 Gew.-% bis 99,5 Gew.-%, beträgt.

Die Auslösung der radikalisch initiierten Polymerisationsreaktion des Monomerengemisches M erfolgt mittels eines dem Fachmann für die wässrige Emulsionspolymeriation geläufigen radikalischen Polymerisationsinitiators (Radikalinitiator). Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Mentyl- oder Cumylhydroperoxid, sowie Dialkyl- oder Diarylperoxide, wie Di-tert.-Butyl- oder DiCumylperoxid eingesetzt werden. Als Azoverbindung finden im wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden. In der Regel beträgt die Menge des eingesetzten Radikalinitiators, bezogen auf die Gesamtmenge des Monomerengemisches M, 0,01 bis 5 Gew.-%, bevorzugt 0,1 bis 3 Gew.-% und insbesondere bevorzugt 0,2 bis 1,5 Gew.-%. Werden Verbindungen sowohl als Radikalkettenregler wie auch als Reduktionsmittel in einem Redoxinitiatorsystem eingesetzt, so wird deren Einsatzmenge entsprechend erhöht.

Erfindungsgemäß ist es möglich, gegebenenfalls eine Teil- oder die Gesamtmenge an Radikalinitiator im Polymerisationsgefäß vorzulegen. Es ist aber auch möglich, die Gesamtmenge oder die gegebenenfalls verbliebene Restmenge an Radikalinitiator während der Polymerisationsreaktion zuzudosieren. Die Gesamtmenge oder die gegebenenfalls verbliebene Restmenge an Radikalinitiator kann dem Polymerisationsgefäß dabei diskontinuierlich in einer oder mehreren Portionen oder kontinuierlich mit gleichbleibenden oder sich verändernden Mengenströmen zudosiert werden. Insbesondere vorteilhaft erfolgt die Dosierung des Radikalinitiators während der Polymerisationsreaktion kontinuierlich mit gleichbleibendem Mengenstrom - insbesondere in Form einer wässrigen Lösung des Radikalinitiators. Werden Reduktionsmittel als Radikalkettenregler eingesetzt, so ist darauf zu achten, dass bei dessen Verwendung als Komponente in einem Redoxinitiatorsystem, dieses immer im Überschuss zum Oxidationsmittel vorliegt.

Die Auslösung der Polymerisationsreaktion erfolgt dabei unter Temperatur- und Druckbedingungen, unter denen die radikalisch initiierte wässrige Emulsionspolymerisation des Monomerengemisches M mit ausreichender Polymerisationsgeschwindigkeit verläuft; sie ist dabei insbesondere abhängig vom verwendeten Radikalinitiator. Vorteilhaft werden Art und Menge des Radikalinitiators, Polymerisationstemperatur und Polymerisationsdruck so ausgewählt, dass der Radikalinitiator eine Halbwertszeit ≤ 3 Stunden, insbesondere vorteilhaft ≤ 1 Stunde und ganz besonders vorteilhaft ≤ 30 Minuten aufweist und immer genügend Radikale vorhanden sind um die radikalische Polymerisation zu initiieren und aufrecht zu erhalten. Falls erforderlich, können Art und Menge des Radikalinitiators, Polymerisationstemperatur und Polymerisationsdruck von einem Fachmann in einfachen Vorversuchen ermittelt werden.

Abhängig vom gewählten Radikalinitiator kommt als Reaktionstemperatur für die erfindungsgemäße radikalische initiierte Polymerisationsreaktion des Monomerengemisches M der gesamte Bereich von 0 bis 170 °C in Betracht. Dabei werden in der Regel Temperaturen von 50 bis 120 °C, insbesondere 60 bis 110°C und vorteilhaft 70 bis 100 °C angewendet. Die erfindungsgemäße radikalische initiierte Polymerisationsreaktion kann bei einem Druck kleiner, gleich oder größer 1 atm durchgeführt werden, so dass die Polymerisationstemperatur 100 °C übersteigen und bis zu 170 °C betragen kann. Vorzugsweise werden leichtflüchtige Monomere, wie beispielsweise Ethylen, Butadien oder Vinylchlorid unter erhöhtem Druck polymerisiert. Dabei kann der Druck 1,2, 1,5, 2, 5, 10, 15 bar (absolut) oder noch höhere Werte einnehmen. Werden Polymerisationsreaktionen im Unterdruck durchgeführt, werden Drücke von 950 mbar, häufig von 900 mbar und oft 850 mbar (absolut) eingestellt. Vorteilhaft wird die erfindungsgemäße radikalisch initiierte Emulsionspolymerisation bei 1 atm (absolut) unter Inertgasatmosphäre, wie beispielsweise unter Stickstoff oder Argon durchgeführt.

In der Regel erfolgt das erfindungsgemäße Verfahren vorteilhaft dergestalt, dass in einem Polymerisationsgefäß bei 20 bis 25 °C (Raumtemperatur) und Atmosphärendruck unter Inertgasatmospäre wenigstens eine Teilmenge des verwendeten entionisierten Wassers, gegebenenfalls eine Teilmenge des Radikalinitiators und des Monomerengemisches M und die Gesamtmenge an Polymer A vorgelegt werden, daran anschließend das Vorlagengemisch unter Rühren auf die geeignete Polymerisationstemperatur aufgeheizt wird und danach die gegebenenfalls verbliebene Restmenge oder die Gesamtmenge an Radikalinitiator und Monomerengemisch M dem Polymerisationsgemisch zudosiert werden.

Erfindungsgemäß erfolgt die Emulsionspolymerisation des Monomerengemisches M in einem wässrigen Medium in Gegenwart eines Polymers A, wobei das Verhältnis der Gesamtmonomerenmenge M zur Gesamtmenge des Polymers A 1:99 bis 99:1, oft 10:90 bis 90:10, vorteilhaft 20:80 bis 80:20 und insbesondere vorteilhaft 40:60 bis 60:40 beträgt.

Das wässrige Reaktionsmedium kann prinzipiell auch noch geringe Mengen an wasserlöslichen organischen Lösungsmitteln, wie beispielsweise Methanol, Ethanol, Isopropanol, Butanole, Pentanole, aber auch Aceton etc. umfassen. Bevorzugt wird das erfindungsgemäße Verfahren jedoch in Abwesenheit solcher Lösungsmittel durchgeführt.

Durch gezielte Variation von Art und Menge der Monomeren M1 und M2 ist es dem Fachmann erfindungsgemäß möglich, wässrige Polymerzusammensetzungen herzustellen, deren aus den Monomeren M1 und M2 in einpolymerisierter Form aufgebauten Polymere M eine Glasübergangstemperatur bzw. einen Schmelzpunkt im Bereich von - 60 bis 270 °C aufweisen. Als Glasübergangstemperatur bzw. Schmelzpunkt des Polymeren M soll dabei im Rahmen dieser Schrift diejenige Glasübergangstemperatur bzw. derjenige Schmelzpunkt verstanden werden, welche(n) das bei alleiniger Polymerisation des Monomerengemisches M, d.h. Polymerisation in Abwesenheit des Polymeren A, erhaltene Polymere aufweisen würde. Erfindungsgemäß vorteilhaft beträgt die Glasübergangstemperatur des Polymeren M ≥ -20 °C bis ≤ 105 °C und bevorzugt ≥ 20 °C bis ≤ 100 °C.

Mit der Glasübergangstemperatur $T_g$, ist der Grenzwert der Glasübergangstemperatur gemeint, dem diese gemäß G. Kanig (Kolloid-Zeitschrift & Zeitschrift für Polymere, Bd. 190, S. 1, Gleichung 1) mit zunehmendem Molekulargewicht zustrebt. Die Glasübergangstemperatur bzw. der Schmelzpunkt wird nach dem DSC-Verfahren ermittelt (Differential Scanning Calorimetry, 20 K/min, midpoint-Messung, DIN 53765).

Nach Fox (T.G. Fox, Bull. Am. Phys. Soc. 1956 [Ser.II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/T_g = x^1/T_g^1 + x^2/T_g^2 + .... x^n/T_g^n,$$

wobei $x^1$, $x^2$, .... $x^n$ die Massenbrüche der Monomeren 1, 2, .... n und $T_g^1$, $T_g^2$, .... $T_g^n$ die Glasübergangstemperaturen der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z.B. in Ullmann's Ecyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J.Wiley, New York 1975, und 3rd Ed. J. Wiley, New York 1989).

Die nach dem erfindungsgemäßen Verfahren zugänglichen wässrigen Polymerzusammensetzungen weisen oft Polymerzusammensetzungen (entsprechend Polymer A, Polymer M sowie mit Polymer M gepfropftes Polymer A) auf, deren Mindestfilmbildetemperatur MFT ≥ 10 °C bis ≤ 70 °C häufig ≥ 20 °C bis ≤ 60 °C oder bevorzugt ≥ 25 °C bis ≤ 50 °C beträgt. Da die MFT unterhalb 0 °C nicht mehr messbar ist, kann die untere Grenze der MFT nur durch die $T_g$-Werte angegeben werden. Die Bestimmung der MFT erfolgt nach DIN 53787.

Die erfindungsgemäß erhaltenen wässrigen Polymerzusammensetzungen weisen üblicherweise Polymerfeststoffgehalte (Summe aus Gesamtmenge an Polymer A und Gesamtmenge an Monomerenmischung M) von ≥ 10 und ≤ 70 Gew.-%, häufig ≥ 20 und ≤ 65 Gew.-% und oft ≥ 40 und ≤ 60 Gew.-%, jeweils bezogen auf die wässrige Polymerzusammensetzung, auf.

Der über quasielastische Lichtstreuung (ISO-Norm 13321) ermittelte zahlenmittlere Teilchendurchmesser (cumulant z-average) liegt in der Regel zwischen 10 und 2000 nm, häufig zwischen 20 und 1000 nm und oft zwischen 50 und 700 nm bzw. 80 bis 400 nm.

Erfindungsgemäß können bei der Herstellung der wässrigen Polymerzusammensetzung auch weitere, dem Fachmann geläufige optionale Hilfsstoffe, wie beispielsweise sogenannte Verdicker, Entschäumer, Neutralisationsmittel, Puffersubstanzen, Konservierungsmittel, radikalkettenübertragende Verbindungen und/oder anorganische Füllstoffe eingesetzt werden.

Die nach vorgenanntem Verfahren hergestellten wässrigen Polymerzusammensetzungen eignen sich insbesondere als Bindemittel bei der Herstellung von Klebstoffen, Dichtmassen, Formkörpern aus fasrigen oder körnigen Substraten, Kunststoffputzen, Papierstreichmassen, Anstrichmitteln und zur Imprägnierung von Rohpapieren sowie zur Modifizierung von mineralischen Bindemitteln oder Kunststoffen.

Insbesondere vorteilhaft eignen sich die erfindungsgemäßen wässrigen Polymerzusammensetzungen zur Modifizierung von mineralischen Bindemitteln.

Die Erfindung soll anhand nachfolgender nicht einschränkender Beispiele erläutert werden.

Beispiele

Beispiel 1

In einem 5-l-Kessel mit Ankerrührer und Stickstoff-Anschluss wurde die Vorlage gerührt unter Stickstoffatmosphäre auf 95 °C aufgeheizt. Bei Erreichen der Temperatur wurden 138,5 g des Zulaufs 2 schnell zugeben und 5 Minuten gewartet. Danach wurde zeitgleich beginnend Zulauf 1 und der Rest von Zulauf 2 innerhalb 1,5 Stunden gleichmäßig zudosiert und danach 1 Stunde nachpolymerisiert. Anschließend wurde die Temperatur auf 80 °C abgekühlt und mit Zulauf 3 die Mischung auf einen pH-Wert von 3 eingestellt. Die so hergestellte Polyacrylsäure hatte ein gewichtsmittleres Molekulargewicht Mw von 9300 g/mol.

In die vorgenannte wässrige Polyacrylsäurelösung wurden 13 g von Zulauf 5 und 11,9 g von Zulauf 6 in einer Portion zugeben und 5 Minuten gewartet. Daran anschließend ließ man zeitgleich beginnend Zulauf 4 innerhalb von 2 Stunden und die Reste der Zuläufe 5 und 6 innerhalb von 2,5 Stunden gleichmäßig zudosieren. Nach Beendigung der Zuläufe 5 und 6 ließ man noch 45 Minuten nachpolymerisieren. Daran anschließend wurde die Temperatur von 80 °C auf 75°C abgekühlt und zeitgleich beginnend die Zuläufe 7 und 8 über einen Zeitraum von 60 Minuten gleichmäßig zudosiert. Daran anschließend ließ man auf Raumtemperatur abkühlen und filtrierte die erhaltene wässrige Polymerisatdispersion über ein 125 µm-Netz.

Vorlage:

| | |
|---|---|
| 460 g | entionisiertes Wasser |

Zulauf 1:

| | |
|---|---|
| 228 g | entionisiertes Wasser |
| 650 g | Acrylsäure |
| 59,5 g | einer 50 gew.-%igen wässrigen Lösung von hypophosphoriger Säure |

Zulauf 2:

| | |
|---|---|
| 214 g | entionisiertes Wasser |
| 16,2 g | Natriumpersulfat |

Zulauf 3:

| | |
|---|---|
| 65,0 g | einer 50 gew.-%igen wässrigen Lösung von Natriumhydroxid |

Zulauf 4:

| | |
|---|---|
| 308 g | entionisiertes Wasser |
| 13,9 g | einer 28 gew.-%igen wässrigen Lösung von Natriumlaurylethersulfat (Texapon® NSO der Fa. Cognis Deutschland GmbH) |
| 19,5 g | Glycidylmethacrylat |
| 371 g | Styrol |
| 260 g | Methylmethacrylat |

Zulauf 5:

| | |
|---|---|
| 65,0 g | einer 10 gew.-%igen wässrigen Lösung von tert.-Butylhydroperoxid |

Zulauf 6:

| | |
|---|---|
| 59,5 g | einer 13,1 gew.-%igen wässrigen Lösung von Acetonbisulfit (1:1-Additionsprodukt von Aceton und Natriumhydrogensulfit) |

Zulauf 7:

26,0 g einer 10 gew.-%igen wässrigen Lösung von tert.-Butylhydroperoxid

Zulauf 8:

31,8 g einer 13,1 gew.-%igen wässrigen Lösung von Acetonbisulfit

Man erhielt eine wässrige Polymerisatdispersion mit einem pH-Wert von 2,5 und einem Feststoffgehalt von 49,5 Gew.-%. Die Viskosität der wässrigen Polymerisatdispersion betrug 125 mPas. Der LD-Wert wurde zu 54% bestimmt.

Der Feststoffgehalt wurde generell bestimmt, indem eine Probe von ca. 1 g in einem Umluft-Trockenschrank für zwei Stunden bei 120 °C getrocknet wurde. Es wurden jeweils zwei separate Messungen durchgeführt. Die in den Beispielen angegebenen Werte stellen Mittelwerte der beiden Messergebnisse dar.

Die Viskosität wurde generell mit einem Rheomat der Fa. Physica bei einer Schergeschwindigkeit von 250 $s^{-1}$ gemäß DIN 53019 bei 23 °C bestimmt.

Der pH-Wert wurde generell mit einem handylab 1 pH-Meter der Fa. Schott bei Raumtemperatur bestimmt.

Die Ermittlung des gewichtsmittleren Molekulargewichts des Polymers A erfolgte generell mittels Gelpermeationschromatographie (Linearsäule: Supremea M der Fa. PSS, Eluens: 0,08 mol/l TRIS-Puffer pH 7,0, entionisiertes Wasser, Flüssigkeitsstrom: 0,8 ml/min, Detektor: Differentialrefraktometer ERC 7510 der Fa. ERC; innerer Standard: Polyacrylsäure-Natriumsalz).

Der LD-Wert wurde generell mittels der auf 0,01 Gew.-% verdünnten wässrigen Polymerisatdispersion mittels eines DR/2010 Spectrometers der Fa. Hach durchgeführt. Als Standard wurde entionisiertes Wasser verwendet.

Beispiel 2

In einem 5-l-Kessel mit Ankerrührer und Stickstoff-Anschluss wurde die Vorlage gerührt und unter Stickstoffatmosphäre auf 95 °C aufgeheizt. Danach wurden zeitgleich beginnend Zulauf 1 innerhalb von 1,5 Stunden, Zulauf 2 innerhalb von 1,75 Stunden und Zulauf 3 innerhalb von 1,25 Stunden gleichmäßig zudosiert. Nach Beendigung von Zulauf 2 ließ man noch 0,5 Stunden nachpolymerisieren. Daran anschließend wurde Zulauf 4 in einem Schuss zugeben und die Temperatur auf 80 °C abgesenkt. Die so hergestellte Polyacrylsäure wies ein gewichtsmittleres Molekulargewicht Mw von 6100 g/mol auf.

In die vorgenannte wässrige Polyacrylsäurelösung wurden bei 80 °C 32,5 g von Zulauf 6 und 24,8 g 7 in je einem Schuss zugeben und 5 Minuten gewartet. Daran anschließend ließ man zeitgleich beginnend die Gesamtmenge von Zulauf 5 innerhalb von 2 Stunden und die Restmengen der Zuläufe 6 und 7 innerhalb von 2,25 Stunden gleichmäßig zudosieren. Nach Beendigung der Zuläufe 6 und 7 ließ man noch 45 Minuten nachpolymerisieren. Daran anschließend wurde die Temperatur von 80 °C auf 75 °C abgekühlt und zeitgleich beginnend die Zuläufe 8 und 9 über einen Zeitraum von 60 Minuten gleichmäßig zudosiert. Daran anschließend wurde zur Reduzierung des Geruchs Zulauf 10 innerhalb von 30 Minuten zudosiert und für weitere 30 Minuten bei dieser Temperatur gerührt. Am Ende Abkühlen. Daran anschließend ließ man auf Raumtemperatur abkühlen und filtrierte die erhaltene wässrige Polymerisatdispersion über ein 125 µm-Netz.

Vorlage:

249 g entionisiertes Wasser

Zulauf 1:

| | |
|---|---|
| 320 g | entionisiertes Wasser |
| 650 g | Acrylsäure |

Zulauf 2:

| | |
|---|---|
| 216 g | entionisiertes Wasser |
| 16,2 g | Natriumpersulfat |

Zulauf 3:

| | |
|---|---|
| 46,4 g | entionisiertes Wasser |
| 35,2 g | 2-Mercaptoethanol |

Zulauf 4:

| | |
|---|---|
| 104 g | einer 50 gew.-%igen wässrigen Lösung von Natriumhydroxid |

Zulauf 5:

| | |
|---|---|
| 260 g | entionisiertes Wasser |
| 46,4 g | einer 28 gew.-%igen wässrigen Lösung von Texapon® NSO |
| 19,5 g | Glycidylmethacrylat |
| 358 g | Styrol |
| 247 g | Methylmethacrylat |
| 26,0 g | n-Butylacrylat |

Zulauf 6:

| | |
|---|---|
| 130 g | einer 10 gew.-%igen wässrigen Lösung von tert.-Butylhydroperoxid |

Zulauf 7:

| | |
|---|---|
| 99,2 g | einer 13,1 gew.-%igen wässrigen Lösung von Acetonbisulfit |

Zulauf 8:

| | |
|---|---|
| 26,0 g | einer 10 gew.-%igen wässrigen Lösung von tert.-Butylhydroperoxid |

Zulauf 9:

| | |
|---|---|
| 31,8 g | einer 13,1 gew.-%igen wässrigen Lösung von Acetonbisulfit |

Zulauf 10:

| | |
|---|---|
| 11,7 g | einer 30 gew.-%igen wässrigen Wasserstoffperoxid-Lösung |

Man erhielt eine wässrige Polymerisatdispersion mit einem pH-Wert von 3,4 und einem Feststoffgehalt von 49,3 Gew.-%. Die Viskosität der wässrigen Polymerisatdispersion betrug 113 mPas. Der LD-Wert wurde zu 83% bestimmt.

Beispiel 3

In einem 5-l-Kessel mit Ankerrührer und Stickstoff-Anschluss wurde die Vorlage gerührt unter Stickstoffatmosphäre auf 95 °C aufgeheizt. Bei Erreichen der Temperatur wurden zeitgleich beginnend Zulauf 1 innerhalb von 1,5 Stunden, Zulauf 2 innerhalb von 1,75 Stunden und Zulauf 3 innerhalb von 1,25 Stunden gleichmäßig zudosiert und danach 0,5 Stunden nachpolymerisiert. Anschließend wurde die Temperatur auf 85 °C abgesenkt, dann Zulauf 4 innerhalb von 0,5 Stunden gleichmäßig zudosiert und anschließend für weitere 0,5 Stunden bei vorgenannter Temperatur nachgerührt. Die so hergestellte Polyacrylsäure hatte ein gewichtsmittleres Molekulargewicht Mw von 15300 g/mol.

In die vorgenannte wässrige Polyacrylsäurelösung wurden 9,5 g von Zulauf 5 innerhalb von 2 Minuten und 11,9 g von Zulauf 6 innerhalb von 1 Minute zugeben und 5 Minuten gewartet. Daran anschließend ließ man zeitgleich beginnend die Reste der Zuläufe 5 und 6 innerhalb von 2,75 Stunden gleichmäßig zudosieren. Nach Beendigung der Zuläufe 5 und 6 ließ man noch 45 Minuten nachpolymerisieren. Daran anschließend wurde Zulauf 7 in einer Portion zugegeben. Anschließend ließ man auf Raumtemperatur abkühlen und filtrierte die erhaltene wässrige Polymerisatdispersion über ein 125 µm-Netz.

Vorlage:

| | |
|---|---|
| 459 g | entionisiertes Wasser |

Zulauf 1:

| | |
|---|---|
| 260 g | entionisiertes Wasser |
| 675 g | Acrylsäure |

Zulauf 2:

| | |
|---|---|
| 220 g | entionisiertes Wasser |
| 16,2 g | Natriumpersulfat |

Zulauf 3:

| | |
|---|---|
| 70,9 g | entionisiertes Wasser |
| 47,3 g | Natriumhydrogensulfit |

Zulauf 4:

| | |
|---|---|
| 9,0 g | einer 30 gew.-%igen wässrigen Wasserstoffperoxid-Lösung |

Zulauf 5:

| | |
|---|---|
| 208 g | entionisiertes Wasser |
| 60,3 g | einer 28 gew.-%igen wässrigen Lösung von Texapon® NSO |
| 7,5 g | einer 45 gew.-%igen wässrigen Lösung von Dowfax® 2A1 |
| 20,3 g | Glycidylmethacrylat |
| 371 g | Styrol |
| 257 g | Methylmethacrylat |
| 27,0 g | n-Butylacrylat |

Zulauf 6:

| | |
|---|---|
| 179 g | entionisiertes Wasser |
| 13,5 g | Natriumpersulfat |

Zulauf 7:

| | |
|---|---|
| 56,5 g | einer 50 gew.-%igen wässrigen Lösung von Natriumhydroxid |

Man erhielt eine wässrige Polymerisatdispersion mit einem pH-Wert von 3,2 und einem Feststoffgehalt von 49,4 Gew.-%. Die Viskosität der wässrigen Polymerisatdispersion betrug 235 mPas. Der LD-Wert wurde zu 65% bestimmt.

Vergleichbeispiel 1

Die Durchführung von Vergleichsbeispiel 1 erfolgte analog Beispiel 1, mit dem Unterschied, dass anstelle 59,5 g einer 50 gew.-%igen wässrigen Lösung von hypophosphoriger Säure 29,8 g von tert.-Dodecylmercaptan eingesetzt wurden.

Der Versuch musste abgebrochen werden, da der Ansatz bei der Dosierung des Zulaufs 1 zu einer hochviskosen Reaktionsmischung koagulierte.

Vergleichbeispiel 2

Die Durchführung von Vergleichsbeispiel 2 erfolgte analog Beispiel 2, mit dem Unterschied, dass anstelle von 2-Mercaptoethanol tert.-Dodecylmercaptan eingesetzt wurde, welches zusammen mit der Wassermenge des Zulaufs 3 dem Zulauf 1 beigemischt wurde.

Nach Beendigung von Zulauf 2 wurde eine hochviskose und inhomogene Polymerisationsmischung erhalten. Der Versuch musste abgebrochen werden.

Vergleichbeispiel 3

Die Durchführung von Vergleichsbeispiel 3 erfolgte analog Beispiel 3, mit dem Unterschied, dass anstelle von Natriumhydrogensulfit Tetrachlorkohlenstoff eingesetzt wurde, welches zusammen mit der Wassermenge des Zulaufs 3 dem Zulauf 1 beigemischt wurde.

Nach Beendigung von Zulauf 2 wurde eine hochviskose und inhomogene Polymerisationsmischung erhalten. Der Versuch musste abgebrochen werden.

Anwendungstechnische Prüfung

Die Prüfung erfolgte durch das im Folgenden näher erläuterte Prüfverfahren für Betonfließmittel auf Basis der EN 196 bzw. DIN 18555 Teil 2.

Geräte:

- Mischer Typ 203 (Fa. Testing Bluhm und Feuerhard GmbH)
- Stoppuhr
- Laborwaage (Genauigkeit +/- 1 g)
- Ausbreittisch d = 300 mm (Fa. Testing Bluhm und Feuerhard GmbH)
- Setztrichter
- Tropftrichter mit Schlauchanschluss
- Löffel
- Rütteltisch Typ 2.0233 (Fa. Testing Bluhm und Feuerhard GmbH)

Einsatzstoffe:

Zement: Zuschlag = 1:3; Sieblinie 0/2
Je 1000 g Normsand CEN I; CEN II und CEN III;
1000 g Heidelberger Zement CEM I 42,5 R (Werk Wetzlar);
440 g Wasser: daraus ergibt sich ein Quotient von Menge Wasser und Menge Zement (W/Z) von 0,44.
Wässrige Polymerisatdispersion als Fließmittel: Die Menge an Fließmittel wird als Festsubstanz, bezogen auf den Zementanteil, angegeben. Die durch die wässrige Polymerisatdispersion zugefügte Wassermenge wird bei der Berechnung der Gesamtwassermenge zur Einstellung des W/Z- Wertes berücksichtigt.

Durchführung der Prüfung

a) Herstellung des Mörtels

Die gesamte Menge der Trockenmischung (Zement + Sand) wird bei ca. 23 °C eine Minute mit einem Mörtelmischer gemäß DIN EN 196 homogen gemischt. Anschließend wird mittels eines Tropftrichters die Nasskomponente (= wässrige Polymerzusammensetzung des Beispiels 1 sowie die resultierenden Wassermenge) über einen Zeitraum von ca. 15 Sekunden kontinuierlich zudosiert. Nach einer Minute Nachrührzeit ist die Herstellung des Mörtels beendet. Zum Vergleich wurde ein Mörtel ohne wässrige Polymerzusammensetzung hergestellt.

b) Ausbreitversuch nach DIN 18555 Teil 2

Zur Bestimmung des Ausbreitmaßes wird der Setztrichter mittig auf die Glasscheibe des Ausbreitmaßtisches gestellt, der Mörtel in drei Schichten eingefüllt und jede Schicht durch Andrücken mit dem Löffel verdichtet. Während des Einfüllens wird der Setztrichter mit einer Hand auf die Glasplatte gedrückt. Der überstehende Mörtel wird abgestrichen und die freie Fläche des Ausbreitmaßtisches wird ggf. gereinigt. Anschließend wird der Setztrichter langsam senkrecht nach oben gezogen und der Mörtel auf der Glasplatte mit 15 Hubschlägen ausgebreitet. Nun wird der Durchmesser des ausgebreiteten Mörtels in zwei rechtwinklig zueinander stehenden Richtungen gemessen. Das Ergebnis wird in cm als arithmetisches Mittel der beiden Messungen angegeben. Die Bestimmung erfolgt 5, 30, 60, und 90 Minuten nach Zugabe der Nasskomponente. Vor jeder Messung wird der Mörtel kurz mit der Hand aufgerührt. Die erhaltenen Ergebnisse sind in Tabelle 1 aufgelistet.

Tabelle 1: Ergebnisse der anwendungstechnischen Prüfung

| Polymerisatdispersion | Menge [Gew.-%] | Ausbreitmaß [cm] nach | | | |
|---|---|---|---|---|---|
| | | 5 Min. | 30 Min. | 60 Min. | 90 Min. |
| Vergleich | - | 20,9 | 16,8 | 15,4 | 14,7 |
| Beispiel 1 | 0,4 | 22,8 | 21,4 | 20,1 | 17,9 |

Aus den Ergebnissen ist klar ersichtlich, dass die erfindungsgemäße wässrige Polymerzusammensetzung aus Beispiel 1 im Vergleich zum nicht additivierten Mörtel ein höheres Ausbreitmaß bewirkt.

## Patentansprüche

1. Verwendung einer wässrigen Polymerzusammensetzung, welche durch radikalische initiierte Emulsionspolymerisation eines Monomerengemisches M, welches zusammengesetzt ist aus

   i) 0,01 bis 10 Gew.-% wenigstens eines ethylenisch ungesättigten Monomeren M1, welches wenigstens eine Epoxid- und/oder wenigstens eine Hydroxyalkylgruppe enthält, und
   ii) 90 bis 99,99 Gew.-% wengistens eines weiteren ethylenisch ungesättigten Monomeren M2, welches sich von den Monomeren M1 unterscheidet,
   in einem wässrigen Medium in Gegenwart eines Polymers A, wobei das Polymer A aus

      a) 80 bis 100 Gew.-% wenigstens einer ethylenisch ungesättigten Mono- und/oder Dicarbonsäure [Monomere A1] und
      b) 0 bis 20 Gew.-% wenigstens eines weiteren ethylenisch ungesättigten Monomeren, welches sich von den Monomeren A1 unterscheidet [Monomere A2], in einpolymerisierter Form aufgebaut ist, und wobei

   das Verhältnis der Gesamtmenge des Monomerengemisches M zur Gesamtmenge des Polymers A 1:99 bis 99:1 beträgt, wobei das Polymer A in einem wässrigen Medium durch radikalisch initiierte Polymerisation der Monomeren A1 und A2 in Anwesenheit eines schwefel-, stickstoff-, und/oder phosphorhaltigen Radikalkettenreglers, welcher bei 20 °C und 1 atm in entionisiertem Wasser eine Löslichkeit ≥ 5 g/100 g Wasser aufweist, hergestellt wurde, zur Modifizierung von mineralischen Bindemitteln.

2. Verwendung nach Anspruch 1, wobei die Löslichkeit des Radikalkettenreglers ≥ 10 g/100 g Wasser beträgt.

3. Verwendung nach Anspruch 1 oder 2, wobei der Radikalkettenregler ausgewählt ist unter hypophosphoriger Säure und deren Alkalimetallsalzen, Alkalimetallhydrogensulfit, Hydroxylamoniumsulfat und/oder 2-Mercaptoethanol.

4. Verwendung nach einem der Ansprüche 1 bis 3, wobei die Menge des Radikalkettenreglers so gewählt wird, dass das gewichtsmittlere Molekulargewicht des Polymeren A ≥ 1000 g/mol und ≤ 20000 g/mol beträgt.

5. Verwendung nach einem der Ansprüche 1 bis 4, wobei die Menge des Radikalkettenreglers so gewählt wird, dass das gewichtsmittlere Molekulargewicht des Polymeren A ≥ 2000 g/mol und ≤ 15000 g/mol beträgt.

6. Verwendung nach einem der Ansprüche 1 bis 5, wobei als Monomer A1 ausschließlich Acrylsäure eingesetzt wird.

7. Verwendung nach einem der Ansprüche 1 bis 6, wobei das wenigstens eine Monomere M1 ausgewählt ist unter Glycidylacrylat, Glycidylmethacrylat, 2-Hydroxyethylacrylat, 2-Hydroxyethylmethacrylat, 3-Hydroxyproplylacrylat, 3-Hydroxypropylmethacrylat, 4-Hydroxybutylacrylat und/oder 4-Hydroxybutylmethacrylat.

8. Verwendung nach einem der Ansprüche 1 bis 7, wobei die Monomeren M1 und M2 der Monomerenmischung M so ausgewählt werden, dass das durch Polymerisation der Monomerenmischung M erhaltene Polymere M eine Glasübergangstemperatur ≥ -20 °C und ≤ 105 °C aufweist.

## Claims

1. The use of an aqueous polymer composition which has been prepared by free radically initiated emulsion polymerization of a monomer mixture M composed of

   i) from 0.01 to 10% by weight of at least one ethylenically unsaturated monomer M1 which comprises at least one epoxide group and/or at least one hydroxyalkyl group, and
   ii) from 90 to 99.99% by weight of at least one further ethylenically unsaturated monomer M2 which differs from the monomers M1,
   in an aqueous medium in the presence of a polymer A, the polymer A being composed of

a) from 80 to 100% by weight of at least one ethylenically unsaturated mono- and/or dicarboxylic acid [monomers A1] and
b) from 0 to 20% by weight of at least one further ethylenically unsaturated monomer which differs from the monomers A1 [monomers A2], incorporated in the form of polymerized units, and

the ratio of the total amount of the monomer mixture M to the total amount of the polymer A being from 1:99 to 99:1, the polymer A having been prepared in an aqueous medium by free radically initiated polymerization of the monomers A1 and A2 in the presence of a sulfur-, nitrogen-, and/or phosphorus-containing free radical chain transfer agent which at 20°C and 1 atm in demineralized water has a solubility of ≥ 5 g/100 g of water, for modifying mineral binders.

**2.** The use according to claim 1, the solubility of the free radical chain transfer agent being ≥ 10 g/100 g of water.

**3.** The use according to claim 1 or 2, the free radical chain transfer agent being selected from hypophosphorous acid and the alkali metal salts thereof, alkali metal hydrogen sulfite, hydroxylammonium sulfate and/or 2-mercaptoethanol.

**4.** The use according to any of claims 1 to 3, the amount of the free radical chain transfer agent being selected so that the weight average molecular weight of the polymer A is ≥ 1000 g/mol and ≤ 20 000 g/mol.

**5.** The use according to any of claims 1 to 4, the amount of the free radical chain transfer agent being selected so that the weight average molecular weight of the polymer A is ≥ 2000 g/mol and ≤ 15 000 g/mol.

**6.** The use according to any of claims 1 to 5, exclusively acrylic acid being used as monomer A1.

**7.** The use according to any of claims 1 to 6, the at least one monomer M1 being selected from glycidyl acrylate, glycidyl methacrylate, 2-hydroxyethyl acrylate, 2-hydroxyethyl methacrylate, 3-hydroxypropyl acrylate, 3-hydroxypropyl methacrylate, 4-hydroxybutyl acrylate and/or 4-hydroxybutyl methacrylate.

**8.** The use according to any of claims 1 to 7, the monomers M1 and M2 of the monomer mixture M being selected so that the polymer M obtained by polymerization of the monomer mixture M has a glass transition temperature of ≥ -20°C and ≤ 105°C.

## Revendications

**1.** Utilisation d’une composition aqueuse de polymère, qui a été préparée par polymérisation en émulsion à amorçage radicalaire d’un mélange de monomères M qui est composé de

i) 0,01 à 10 % en poids d’au moins un monomère M1 à insaturation éthylénique, qui contient au moins un groupe époxy et/ou au moins un groupe hydroxyalkyle, et
ii) 90 à 99,9 % en poids d’au moins un autre monomère M2 à insaturation éthylénique, qui diffère des monomères M1,
dans un milieu aqueux, en présence d’un polymère A, le polymère A étant constitué de

a) 80 à 100 % en poids d’au moins un acide monocarboxylique et/ou acide dicarboxylique à insaturation éthylénique [monomère A1] et
b) 0 à 20 % en poids d’au moins un autre monomère à insaturation éthylénique, qui diffère des monomères A1] [monomère A2], sous forme incorporée par polymérisation, et

le rapport de la quantité totale du mélange de monomères M à la quantité totale du polymère A valant de 1:99 à 99:1, le polymère A ayant été préparé dans un milieu aqueux par polymérisation à amorçage radicalaire des monomères A1] et A2 en présence d’un régulateur de chaîne radicalaire soufré, azoté et/ou phosphoré qui présente à 20 °C et sous 1 atm dans de l’eau désionisée une solubilité ≥ 5 g/100 g d’eau, pour la modification de liants minéraux.

**2.** Utilisation selon la revendication 1, dans laquelle la solubilité du régulateur de chaîne radicalaire est ≥ 10 g/100 g d’eau.

3. Utilisation selon la revendication 1 ou 2, dans laquelle le régulateur de chaîne radicalaire est choisi parmi l'acide hypophosphoreux et ses sels de métaux alcalins, un hydrogénosulfite de métal alcalin, le sulfate d'hydroxylammonium et/ou le 2-mercaptoéthariol.

4. Utilisation selon l'une quelconque des revendications 1 à 3, dans laquelle on choisit la quantité du régulateur de chaîne radicalaire de manière que la masse moléculaire moyenne en poids du polymère A soit ≥ 1 000 g/mole et ≤ 20 000 g/mole.

5. Utilisation selon l'une quelconque des revendications 1 à 4, dans laquelle on choisit la quantité du régulateur de chaîne radicalaire de manière que la masse moléculaire moyenne en poids du polymère A soit ≥ 2 000 g/mole et ≤ 15 000 g/mole.

6. Utilisation selon l'une quelconque des revendications 1 à 5, dans laquelle on utilise comme monomère A1] exclusivement l'acide acrylique.

7. Utilisation selon l'une quelconque des revendications 1 à 6, dans laquelle ledit au moins un monomère M1 est choisi parmi l'acrylate de glycidyle, le méthacrylate de glycidyle, l'acrylate de 2-hydroxy-éthyle, le méthacrylate de 2-hydroxyéthyle, l'acrylate de 3-hydroxypropyle, le méthacrylate de 3-hydroxy-propyle, l'acrylate de 4-hydroxybutyle et/ou le méthacrylate de 4-hydroxybutyle.

8. Utilisation selon l'une quelconque des revendications 1 à 7, dans laquelle on choisit les monomères M1 et M2 du mélange de monomères M de manière que le polymère M obtenu par polymérisation du mélange de monomères M présente une température de transition vitreuse ≥ -20 °C et ≤ 105 °C.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102006001979
- DE 102006019184
- DE 4003422 A
- US 4269749 A


### In der Beschreibung aufgeführte Nicht-Patentliteratur


- Emulsionspolymerisation in Encyclopedia of Polymer Science and Engineering. 1987, vol. 8, 659 ff
- **D.C. BLACKLEY.** *High Polymer Latices,* 1966, vol. 1, 35 ff
- **H. WARSON.** The Applications of Synthetic Resin Emulsions. 1972, 246 ff
- **D. DIEDERICH.** *Chemie in unserer Zeit,* 1990, vol. 24, 135-142
- Emulsion Polymerisation. Interscience Publishers, 1965
- **F. HÖLSCHER.** Dispersionen synthetischer Hochpolymerer. Springer-Verlag, 1969
- **A. ECHTE.** Handbuch der Technischen Polymerchemie. VCH, 1993
- **B. VOLLMERT.** Grundriss der Makromolekularen Chemie. E. Vollmert Verlag, 1988, vol. 1
- Methoden der organischen Chemie. **HOUBEN-WEYL.** Makromolekulare Stoffe. Georg-Thieme-Verlag, 1961, vol. XIV/1, 411-420
- Methoden der organischen Chemie. **HOUBEN-WEYL.** Makromolekulare Stoffe. Georg-Thieme-Verlag, 1961, vol. XIV/1, 192-208
- **G. KANIG.** *Kolloid-Zeitschrift & Zeitschrift für Polymere,* vol. 190, 1
- **T.G. FOX.** *Bull. Am. Phys. Soc.,* 1956, vol. 1, 123
- Ullmann’s Encyclopädie der technischen Chemie. Verlag Chemie, 1980, vol. 19, 18
- Ullmann’s Ecyclopedia of Industrial Chemistry. VCH, 1992, vol. 5, A21, 169
- **J. BRANDRUP ; E.H. IMMERGUT.** Polymer Handbook. J. Wiley, 1966
- POLYMER HANDBOOK. J.Wiley, 1975
- POLYMER HANDBOOK. J. Wiley, 1989